# EUROPEAN PATENT SPECIFICATION

(11) **EP 1 414 212 B1**
(45) Date of publication and mention of the grant of the patent: **12.10.2005**
(21) Application number: 02079397.2
(22) Date of filing: 22.10.2002
(51) Int. Cl.: H04L 29/06

(54) **Method and system for authenticating users in a telecommunication system**
Verfahren und System zur Authentifizierung von Benutzern in einem Telekommunikationssystem
Methode et système pour l'authentification des usagers dans un système de télécommunication

(43) Date of publication of application: 28.04.2004
(73) Proprietor: TELEFONAKTIEBOLAGET LM ERICSSON (publ), 164 83 Stockholm (SE)
(72) Inventor: Fernandez Alonso, Susana, 28009 Madrid (ES); Plata Andres, Isabel, 28903 Madrid (ES)
(74) Representative: Elzaburu Marquez, Alberto

(56) References cited:
- EP-A- 0 442 838
- WO-A-02/082296
- US-A1- 2001 037 469
- US-B1- 6 434 700

## Description

### FIELD OF THE INVENTION

The present invention relates to authentication of users in a telecommunication system. More precisely, it relates to a system and a method for authenticating a user according to one among a plurality of authentication mechanisms.

### BACKGROUND

In a telecommunication system, authentication is a process that can be run for the purpose of verifying that a user requesting access to it, or requesting a given service through it, is the one he claims to be.

The process of authenticating a user accessing a telecommunication system from a given terminal (hereinafter also referred to as *communication equipment, user equipment,* or UE) varies depending on several factors, such as the security criterion implemented by the telecommunication system, the characteristics and capabilities of the UE, the communication protocol used, etc.. These variations caused a plurality of authentication mechanisms to be devised to fulfil the different authentication requirements of the different telecommunication systems.
Thus, for example, some existing authentication mechanisms, such as an AKA (*Authentication and Key Agreement*) authentication mechanism used in mobile systems, rely on a secret key shared among the telecommunication system and a tamper-resistant identity module, usually known as Subscriber Identity Module card, or SIM card, connected to (or contained in) said terminal; others, such as the authentication mechanisms used for accessing services provided by the Internet (e.g.: such as the "Basic" authentication mechanism described for the Hypertext Transfer Protocol, HTTP, in IETF RFC1945, May-1996), rely on a secret known by the user and that needs to be inputted into the terminal (e.g.: a combination of user-name and password).

To describe how some telecommunication systems have adapted their authentication resources to support a single authentication mechanism, the user authentication in mobile telecommunication systems will, as an example, hereinafter be described more in detail.

In mobile telecommunication systems, a user authentication mechanism based on the authentication logic provided by an application embedded in a tamper-resistant smart card (*SIM* card) is supported. A SIM card is intended to be accommodated, either: fixed or removable, in the user's equipment used for accessing said systems.
For different mobile systems these smart cards are named differently; thus, for example, in a 2G (2nd. Generation) mobile system (such as a Global System for Mobile communications, or GSM) they are referred to as *SIM cards,* while in 3G (3rd. Generation) mobile system (such as a Universal Mobile Telecommunications System, or UMTS) they are referred to as *UICC* (UMTS Integrated Circuit Card).
Similarly, the application (also called *identity module*) embedded in the smart card is also named differently in different mobile systems; hence, for example, in a 2G system it is called SIM (*Subscriber Identity Module*), and in a 3G system it is called USIM (*User Services Identity Module*). Also, in a 3G system that provides multimedia services based on Internet Protocol (also known as *IP multimedia services,* or *IM services*), it is called ISIM (*IM* *Services Identity Module*). Hereinafter, and for the sake of greater simplicity, the term *xSIM* will be used to refer to an *identity module* regardless of the mobile technology it belongs to (e.g.: if 2G, 3G, 3G with IM services, etc.). Also, for simplicity reasons, the term *SIM card* will hereinafter be used to refer to well-known smart cards used in mobile communication systems.

A user having a subscription to a mobile system is provided with an SIM card that embeds an xSIM. The xSIM contains, among other data, an identifier of the user and a long-term *secret key* (*Ki*) uniquely assigned to said user. The xSIM also contains the authentication logic to operate one authentication mechanism based on said secret key (Ki). This allows a given user to connect his/her SIM card to any terminal (given that said terminal is suitable to accept said connection with the SIM card and to inter-operate with it) and use it to access the mobile system.

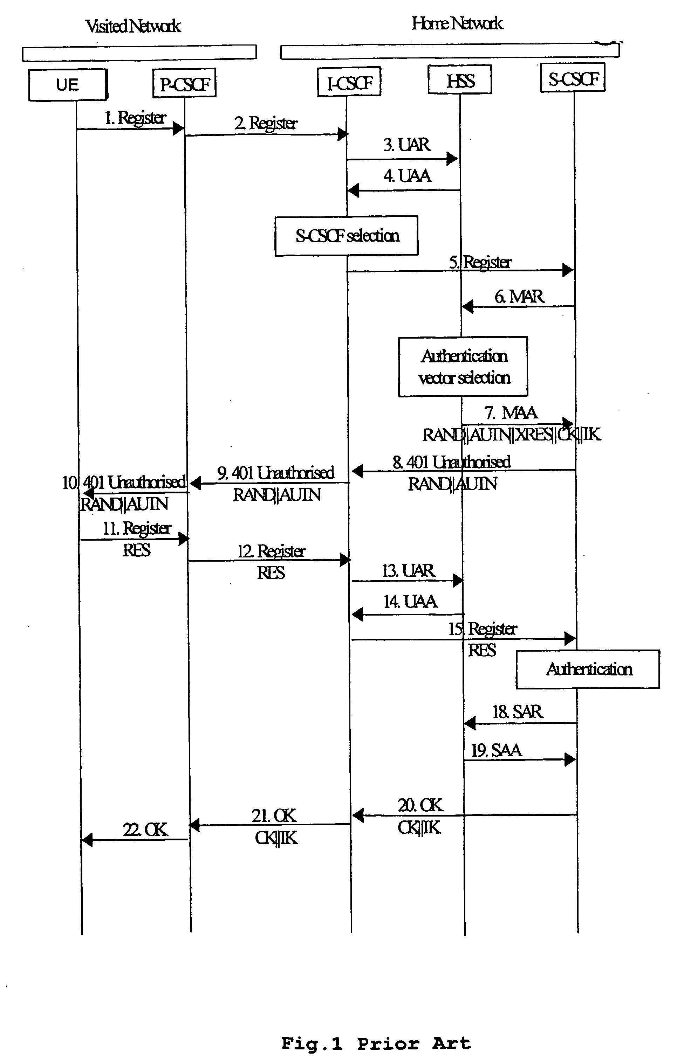

Regardless of specific details related to the mobile technology used (2G, 3G, 3G with IM), the authentication mechanism used to authenticate a user who access a mobile telecommunication system is rather similar and is known as AKA (*Authentication and Key Agreement*).
In order to illustrate the AKA authentication mechanism, an authentication process of a user from a terminal (UE) in the IMS (IM Subsystem, or Internet Protocol Multimedia Subsystem) of a 3G system will now be described with reference to the signaling flow of Fig.1. Said figure has been taken from current standard TS 29.228 (V5.0.0; Jun-2002) released by the 3GPP (3rd. Generation Partnership Project), which is the standardization forum for 3G systems. As an example of a request from a user that is subject to previous authentication before granting its execution, Fig.1 depicts the signaling flow of a *registration request* of a user in the IMS when said user is not yet registered, and the subsequent authentication of said user.
Some IMS basic concepts will first be detailed for the understanding of the flow depicted in Fig.1. Further additional details related to the IMS architecture and basic signaling flows are respectively available in the 3GPP specifications: TS 23.002 (V5.7.0; Jun-2002) and TS 23.228 (V5.5.0; Jun-2002).

The IMS of a 3G communication system is comprised of one or more instances of a set of functional entities intended to provide multimedia services to their users. According to 3GPP standards, some of these functional entities are:
- a home server entity in charge of storing the subscriber data of the users of the system and providing location information (referred to as *Home Subscriber Server,* HSS, also having functions of 2G *Home Location Register, HLR*);
- a server entity serving the access to said system to the terminals (UEs) used by its users (referred to as *Proxy Call State Control Function,* P-CSCF);
- a server entity serving the initial handling of transactions involving users of said system (referred as *Interrogating Call State Control Function,* I-CSCF); and
- a server entity serving session control services for sessions involving users of said system (referred to as *Serving Call State Control Function,* S-CSCF).
The protocol *SIP* (*Session Initiation Protocol,* IETF RFC3261, Jun-2002) was the protocol selected by 3GPP forum for signaling between a user terminal (UE) and the entities of the IMS, as well as among the *CSCF* entities of the IMS (P-CSCF, I-CSCF, S-CSCF), while the protocol *DIAMETER* (*draft-ietf-aaa-diameter-12.txt*, Internet Draft; Jul-2002) was the protocol selected for signaling between *CSCF* entities and the *home server* HSS.

Step 1 of Fig.1 originates from a user who is trying to register into the IMS of the 3G mobile system. A SIP message *"REGISTER"* is sent from its terminal (UE) towards the server which is serving the access, P-CSCF. The *REGISTER* message contains, among other data, one or more identifiers that identify both: the user and the domain of his/her (home) network operator.

In step 2, the P-CSCF forwards the message to the corresponding I-CSCF that, in steps 3 and 4 verifies against the HSS if said user is already registered. Assuming that the user is not yet registered, the I-CSCF forwards in step 5 the registration request, REGISTER, to the S-CSCF that will finally serve said user from said terminal for further IM services.
The S-CSCF has means for detecting if a service request (such as a *registration request,* REGISTER) comes from a user who is already authenticated for said service or not. Then, upon reception of the registration request of a not yet authenticated user, the S-CSCF in step 6 asks the HSS for one or more *Authentication Vectors* (hereinafter, AV) to authenticate said user. The content of an AV is specifically built for a specific user and consists of a set of five elements, called *quintuplet,* comprising:
- 2 security keys (*Cipher Key,* CK, and *Integrity Key,* IK), used to ensure data integrity and confidentiality of messages and user data exchanged between the UE and the telecommunication system;
- a network authentication token (AUTN), which in turn consists of a set of parameters, wherein some of them (named *Anonymity Key,* AK, and *Message Authentication Code,* MAC) are generated based on the same secret key (Ki) which is stored in the xSIM assigned to said user and connected to his/her UE;
- a random number (RAND); and
- an expected response (XRES)
A set of Authentication Vectors, AVs, for a given user can be previously available within the home server, HSS, ready to be served to the requesting entity (S-CSCF); alternatively, these AVs can be requested to an AUC (*Authentication Centre*).

In step 7, the S-CSCF receives one or more AVs specifically built for authenticating said user from said S-CSCF. Then it selects one of them and sends back a SIP message "*401 UNAUTHORIZED*" that goes back to the UE through the I-CSCF and P-CSCF in steps 8 to 10. Said message contains an *authentication header,* which is a structured parameter used in SIP to indicate that authentication is required (in SIP terminology, *header* is the name given to a parameter of a message containing additional information for it). Said header conveys, among other data, an authentication string field, called "*nonce*". In other authentication mechanisms (such as "HTTP-Digest"; IETF RFC2617, Jun-1999) said *nonce* can be a fully free random string that, together with a secret provided by the user (e.g.: a combination of user-name and password), will be used by the terminal to produce a "fingerprint" (message digest) of these data, that will serve to authenticate the user. However, in this case, said *nonce* depends on said secret key (i.e.: it is a function of "Ki", f{Ki}) as it is a concatenation of said authentication token (AUTN) and said random number (RAND).
The authentication header conveys as well an indication of the authentication algorithm (indicating AKA based authentication algorithm) to be applied within the xSIM for, among other purposes: extracting the security keys, CK and IK, verifying the message validity, and computing the response number to be sent back for getting a granted authentication into the system.

At reception of the message *401 UNAUTHORIZED* in step 10, the UE passes the content of the received message to the xSIM in the connected smart card that performs the functions described above (not shown in Fig.1). In particular the authentication logic in the xSIM computes a response number, RES, as a result of applying a specific ciphering algorithm to both: the part of the received *nonce* that corresponds to the RAND and to the secret key (Ki) that it stores for said user.
Once the response number RES is obtained, in step 11 a new REGISTER message is sent again from the UE. This time the message contains an *authorization header,* which is a structured parameter used in SIP to request authentication of a user once a previous rejection (*401 UNAUTHORIZED*) has been received. The *authorization header* contains, among other data, a field called "*response*" that is built based on an algorithm that computes various data, among them, the response number RES that has been calculated by the xSIM.

Steps 12 to 15 are a repetition of previous steps 2 to 5. When the new REGISTER message arrives at the S-CSCF, it extracts the response number RES from the *response* field and compares it with the expected response XRES contained in the authentication vector AV selected. If they match, then the user is authenticated from that terminal UE. Then, in further steps 18 and 19 it notifies to the HSS that it (i.e.: this S-CSCF) will serve from now on IM services to this user and download the corresponding user profile of said user (i.e.: a set of data that will be used in the S-CSCF for determining how services shall be handled for the user). Finally, through steps 20 to 22, the UE receives a confirmation of a granted registration.

Modern telecommunication systems, such as 3G mobile systems and, more specifically, 3G mobile systems having IMS for providing multimedia services in addition to mobility, are intended to serve their users from a plurality of terminal types and from a plurality of access types. Regarding terminal types, there can be UEs having different capabilities for media handling (e.g.: handling: voice, static images, video, data, etc., and any combination thereof). Regarding access types, it has to be mentioned that, nowadays, mobile operators want to extend their offer regarding access networks (i.e.: the communication network used for providing access to the mobile system) by including the use of unlicensed broadband access types, such as WLAN (Wireless Local Area Network), that allow access rates up to 11 Mbps, to the typical radio access networks presently used in mobile systems, such as GERAN (GSM/EDGE Radio Access Network) or UTRAN (UMTS Terrestrial Radio Access Network).
This plurality of access types also relates to UE's capabilities and characteristics. Hence, for example, the UE can be a typical mobile terminal having communication means arranged for accessing to the 3G system via UTRAN, a lap-top computer accessing the 3G system through another kind of access network, such as an WLAN, etc..

However, the fact of supporting only one authentication mechanism, such as AKA, based on the authentication logic provided by a SIM card accessing a long-term secret key "Ki" contained on it, limits the characteristics of the UEs that can access to said 3G systems and, in particular, forces them to be capable of being connected to (or capable to host) a SIM card, and to have means to communicate and co-operate with the application embedded in said SIM card. Thus, disregarding the use of UEs which can fit the rest of the capabilities required to access said kind of telecommunication systems, and which can already be widely available.
Furthermore, although AKA is considered to be a strong authentication mechanism, there could be resources requested by users accessing the telecommunication system that can be subject to authentication, but that do not require such strong authentication.
Therefore, it should be desirable to support a less restrictive authentication framework in telecommunication systems that intend to provide services to a plurality of terminal types.

US patent application *US 2001*/*037469 A1* discloses a method and a system for authenticating a user who makes a request for a service ("*application server, 202*") from a terminal ("*client, 200*") according to one among a plurality of authentication mechanisms. The authentication framework disclosed by *US 2001*/*037469* allows to simplify the access of users to services by: authenticating once a user according to any authentication mechanism, creating a "*session*" for an authenticated user, and then granting said user access to any service for the duration of the created session. This solution allows to simplify the process for selecting an authentication mechanism, and relieves in some cases (i.e. if valid session) the telecommunications system of having to authenticate a user. However, in *US 2001*/*037469* there is no control for determining what authentication mechanism can be used for a request for a service; since there are not selection criteria given that, according to said patent application, any available mechanism can be used without restriction.

US patent *US 6434700 B1* also discloses a method and a system for authenticating a user from a terminal according to one authentication mechanism selected from a plurality of authentication mechanisms. This patent discloses a more manageable solution as the one disclosed in *US 2001*/*037469.* According to the solution disclosed by *US 6434700,* the authentication mechanisms are selected according to an authentication profile ("*profile* *information*") associated to the user making the request, which states the kind of "*password*" that can be received from a terminal handled by said user and, consequently, determines the corresponding authentication mechanism for authenticating the received password. Once authenticated, the user can access to any server application available in the telecommunications system. However, a solution as disclosed therein forces a user to utilize always a terminal having the authentication capabilities required so as to run an authentication procedure according to the authentication mechanism associated to said user on his authentication profile.

This problem can be fixed according to a solution as disclosed in patent application *WO 02*/*082296 A.* According to it, a relationship is established between authentication mechanisms and user-identifiers (user names/domains), which later allow determining what authentication mechanism(s) must be used for authenticating a given user who makes a request. As opposed to *US 6434700,* the solution disclosed by *WO 02*/*082296* allows the user terminal to indicate its authentication capabilities. According to *WO 02*/*082296,* when more than one authentication mechanism results as selectable for said user according to his user-identifier, or even when the user, or his terminal, knows what authentication mechanism to use, the final decision for selecting the authentication mechanism that will be used is taken locally by the user or by his terminal. However, said local decision might be based on an inaccurate or obsolete knowledge about the authentication requirements for accessing a given service.

A flexible authentication framework should not be implemented to the detriment of the manageability of said framework; therefore, a flexible control of the authentication mechanisms available to access services and resources in a telecommunications system is a relevant factor for achieving said manageability.

### SUMMARY OF THE INVENTION

In one aspect, the invention relates to a method for authenticating users as claimed in claim 1. In a second aspect, the invention relates to a system for authenticating users as claimed in claim 8. Embodiments of the invention are set out in the dependent claims.

According to the method or system of the invention, the authentication mechanism finally selected for authenticating a user is not selected based exclusively on the authentication capabilities of the terminal (if received), and/or based on data about authentication mechanisms which might be established in authentication profiles associated to said user or to more users (if said profiles exists), but taking into account the suitability of the authentication mechanism(s) for the requested service or resource.

The method or system of the invention allows that, in addition to other possible selection criteria, only authentication mechanisms that suit with the authentication requirements settled for a given service or resource can be selected for allowing access to it; thereby, allowing to deploy a more manageable authentication policy for accessing services and resources served from a telecommunications system which still permits a flexible and controlled use of a plurality of available authentication mechanisms, wherein the selection of the authentication mechanism for authenticating a user from a terminal does not need to rely on a decision made by said user or by his terminal, which might be based on an inaccurate or obsolete knowledge about the authentication requirements for accessing a given service.

According to embodiments of the invention, authentication profiles may also be set up so as to allow to establish a relationship between a service or resource that can be requested from a terminal, and data related to the authentication mechanism(s) allowed for accessing said service or resource. Accordingly, storing profile data related to services/resources in a similar manner as profile data related to users, makes possible to easily determine whether a given authentication mechanisms fits for a user accessing a given service/resource by comparing the matching authentication mechanisms in both authentication profiles, wherein the authentication capabilities of the terminal making a request may also be taken into account.

According to a further embodiment of the invention, once an authentication mechanism has been selected for authenticating a user, a further selection can be made to choose a server entity in the telecommunications system that will run the authentication process of said user according to the selected authentication mechanism.

The method or system of the invention permit to select authentication mechanisms which fit with an authentication policy in the telecommunication system that can state, for example, in a per user authentication case basis and/or in a global basis, the authentication mechanisms that can be accepted and supported to grant access to a service or resource served from said telecommunications system.

### BRIEF DESCRIPTION OF DRAWINGS

**Figure 1** shows an authentication signaling flow as currently defined in 3GPP standard 29.228 for a IP Multimedia user.
**Figure 2** is a flowchart showing the selection process of an authentication mechanism in a telecommunication system according to the invention.
**Figure 3** shows a schematic view of various authentication data stored in a telecommunication system which can be used in the selection process of Fig.2.
**Figures 4, 5** and **6** show simplified authentication signaling flows according to embodiments of the present invention.

### DETAILED DESCRIPTION

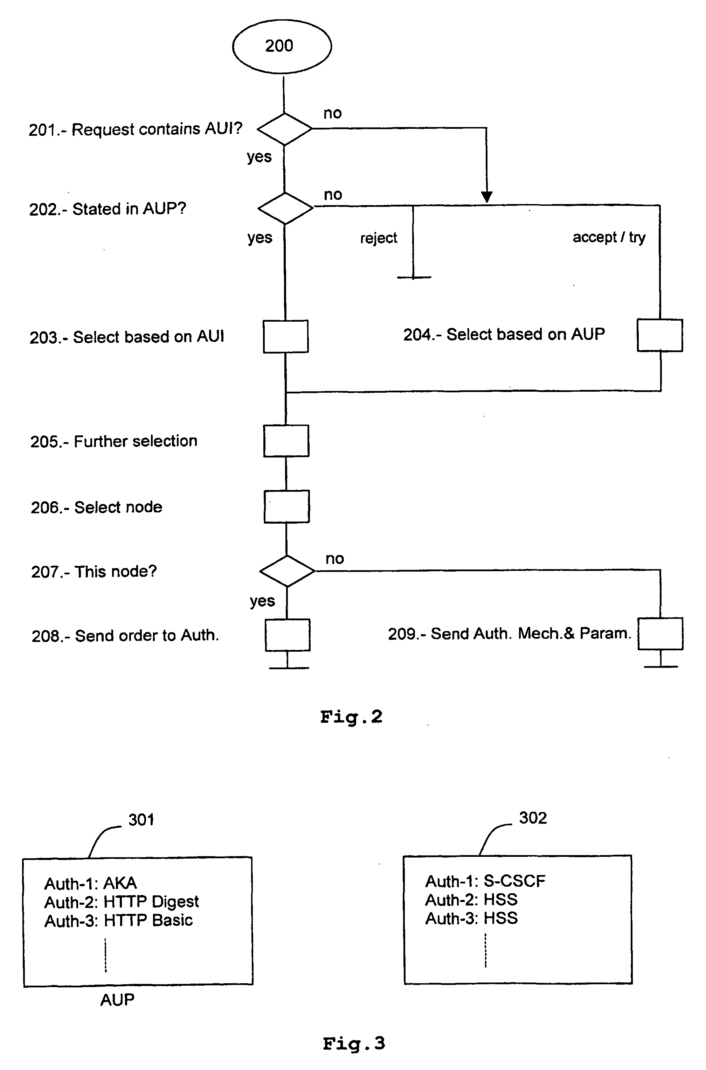

The invention shall now be described in detail with reference to figures 2 to 6 according to a preferred embodiment that considers, as an example of a telecommunications system where the invention can apply, a 3G mobile system that implements the so-called IMS (Internet Protocol Multimedia Subsystem). It shall, however, be understood that the scope of the present invention is not limited to said 3G systems with IMS, nor to any specific signaling protocol or authentication mechanism; and that a skilled person can readily apply it to any telecommunications system having to handle user authentication.

The basic flow of an authentication mechanism selection process (200) in a telecommunication system according to the present invention is shown in Fig.2. The process is invoked in the telecommunication system upon reception of a *request* from a terminal (UE) that invokes a given service for a user and, like any other process that runs in a telecommunication system, it can be implemented by means of software, hardware or combination thereof.
Aspects dealing with the detailed nature of said *request* are beyond the scope of the present invention. I.e.: the received request can be, for example, a user registration request, asking to attach a communication equipment to the telecommunication system for accessing further services provided by it; it can also be, for example, a request asking for a specific service (or resource) to be provided (or accessed) to said user once he/she is already registered (such as a call request, access to a voice mailbox, location information about the closest hospital, etc.).
The terminal that sends the request can be, for example, a single communication equipment adapted to communicate with the telecommunication system, or it can consist of an assembly of said communication equipment connected to a tamper-resistant authentication device, such as a SIM card having an identity module (xSIM), that contains a long-term secret key (Ki) and authentication logic for operating one or more authentication mechanisms based on said secret key.

It shall be noticed here that the sequence of actions depicted in the various steps of Fig.2, only shows a possible embodiment of a process for selecting an authentication mechanism according to the invention, wherein said selection is made based on the content of said request and, in addition to it, based on an authentication profile related to the user who requests the service. Nevertheless, other alternative sequences of steps shown in Fig.2, even sequences comprising a sub-set of those steps (including, for example, a selection made based only on the content or, alternatively, on said authentication profile) are equally possible, and can be inferred by the skilled person in view of the information disclosed hereinafter.

In step 201 the content of the received request is checked. In particular it can be checked if the request contains data (AUI) related to one, or more than one, authentication mechanism(s) supported by the UE. This kind of data can be conveyed in any suitable (already existing or newly defined) parameter of the message that conveys the received request. Accordingly, taking protocol SIP as an example, a SIP request (such as REGISTER, INVITE) the AUI can consist of an existing optional SIP header, such as an *authentication header,* that states the name of a well-known authentication mechanism. Alternatively, the name of one or more well-known authentication mechanisms could be conveyed in a new header, such as "*authentication supported*"*,* included in the SIP request.
If the check of step 201 yields a positive result ("yes"), then, in step 202, it can be checked whether the authentication mechanism indicated as supported in the received request (or any of them, if more than one are indicated) are contained in an authentication profile (AUP) that will apply for said user, and that can state (as will be later detailed), among other data, the set of authentication mechanisms supported in the telecommunication system for authenticating said user. Otherwise, if the check of step 201 yields a negative result ("no"), according to alternative embodiments, the request can further be, either: rejected ("reject"), or it can be accepted at this point ("accept/try"). In the latter case, the selection of one (or more than one) authentication mechanism for trying to authenticate said user is made in step 204 according to the AUP that corresponds to said user.

An authentication profile (AUP) as referred to above can be related to a specific user. A telecommunication system usually has storage means to store a plurality of data related to a given user. For example, for a user of a mobile system these data are stored in a, so-called, *subscriber data register* related to said user, and are usually held within a home server (e.g.: HLR, HSS). The nature of the data stored per subscriber in said storage means usually depends on the complexity and variety of services provided by the telecommunication system. Hence, for example, for a given user, it can be stored: the identifiers assigned to said user (normally used to address his/her *subscriber data register*), that can be multiple in number and format (e.g.: an E.164 telephone number such as *+1-212-555-222*, a Uniform Resource Locator for SIP, or SIP-URL such as *John_Doe@homeABC.net*, etc.); data related, for instance, to supplementary services (e.g.: for "call forwarding" supplementary service: if forwarding of calls can take place for this user, upon what conditions, the forwarding-to number, etc.); etc. Said storage means can further store data related to one or more authentication mechanism that can be supported to authenticate this user, acting then as an individual AUP.
Furthermore, the same user could be related to more than one AUP, wherein each one relates to, for example, each one of the identifiers assigned to said user, or to a group of them, thus, allowing an AUP selection according to the content of the received request, wherein a user identifier (ID) received in the request is considered in the selection.

As an alternative embodiment, the same authentication profile (AUP) can be related to a plurality of users, or even to all of the users of the telecommunication system, acting then as a collective AUP that states, for said plurality of users, a common authentication profile. In this case, the aforementioned *subscriber data register* of a user assigned to a collective AUP can contain a reference pointing out the corresponding collective AUP.
According to a further alternative embodiment, a plurality of users can each be assigned to an individual AUP, while other users can be assigned to a collective AUP. Furthermore, more than one collective AUPs can be defined within the same telecommunication system, wherein groups of users, that are not assigned to an individual AUP, are assigned to any of them.

Fig.3 (301) shows schematically the content of an AUP (regardless of whether it is an individual AUP or a collective AUP). As shown in the figure, it can contain a list of authentication mechanisms (referenced in the figure as "Auth-1", "Auth-2", "Auth-3", etc.) each stating a specific well-known authentication mechanism (such as "AKA", "HTTP-Digest", "HTTP-Basic", etc.). As an implementation option, the list of authentication mechanisms (if more than one are stated) can be ordered according to their strength (as shown in Fig.3).

Further data could be contained within an AUP that are not shown in Fig. 3 (301). For example, within the same AUP, more than one list than the one depicted in the figure could exist per service or per resource that can be requested in a request received from a user, thus establishing a relationship between a given service/resource with the authentication mechanism (or list of authentication mechanisms) that are to be used for it. Each of these possible sub-sets of related authentication mechanism(s)- service/resource within an AUP can also be considered as an authentication profile AUP itself for the purpose of the AUP determination that will be referenced in further steps.
The storage of the relationship mentioned above within an AUP would provide an additional criteria that can be used for selecting an authentication mechanism (or a list of them) based on the content of the received request, wherein the service/resource demanded by said request is considered; as it will be further referenced. Hence, for a given service (such as a user registration request), one or a list of supported authentication mechanisms can be stated. Similarly, for other services or access requests to other resources (such as, for example, access to voice mailbox, checking of accounting balance, etc.), another list of supported authentication mechanisms can be set.

The possible combinations of the alternative embodiments related to AUP assignment and content described above facilitates the deployment of a flexible authentication policy in the telecommunication system. Thus, for example, the authentication mechanism(s) that can be supported can be stated on a per user basis, per group of users basis, per access to service/resource basis, or combinations thereof.

Referring back to the flowchart of Fig.2; in step 202 the authentication data received in the request, AUI, is checked against the AUP that corresponds to said user. As cited earlier, for users assigned to more than one identifier, said checking can take into account the user identifier (ID) received in the request for determining the corresponding AUP. Also, the service or resource demanded by the received request can, additionally or alternatively, be used to determine an AUP.
If there is a matching ("yes") between the authentication mechanisms supported by the terminal and any of the authentication mechanism(s) stated in the AUP, the matching authentication mechanism is then selected in step 203. In case there is more than one matching authentication mechanism, then, as an implementation option, any of them, or the strongest one can be selected. Alternatively, for the purpose of the further selection of step 205, the list of matching authentication mechanisms can be temporarily kept.
Otherwise, if there is no matching authentication mechanism ("no"), the request can further be, either: rejected ("reject"), or its processing can be accepted hitherto ("accept/try"). In the latter case, the selection of one (or more than one) authentication mechanism for trying to authenticate said user is made in step 204.

In step 204 one (or more than one) authentication mechanism can be selected based on the AUP that relates to said user. The determination of said AUP can, as mentioned earlier, be based on several (implementation dependant) criteria, such as: if the requesting user is assigned to only one profile (either: individual or collective AUP) or more than one (e.g.: in case said user has several AUPs related to several identifiers), and/or in the service requested. For users having one or more than one identifier, a user identifier (ID) received in the request can first be used for selecting the AUP related to said identifier (e.g: locating first the *subscriber data register* that relates to the received ID, and then finding out the corresponding AUP). Also, as mentioned earlier, additionally or alternatively, the service or resource demanded by the received request can, as an option, be used to determine the AUP that relates to it.
Once the corresponding AUP has been determined, a similar logic as the one described before with reference to step 203 in case of multiple matching can be applied. That is to say: if the AUP states more than one authentication mechanism, as an implementation option, any of them, or the strongest one can be selected. Also, for the purpose of the further selection of step 205, all or a set of the authentication mechanisms stated in the AUP can be temporarily kept.

In step 205, as indicated previously, a further selection can be made based on the service or resource involved by the received request comparing it with the supported authentication mechanism(s) stated in the corresponding AUP for said service or resource. So, for example, if from the previous selection made in earlier steps 203 or 204, we have: two authentication mechanisms selected (e.g.: "Auth-1", AKA; and "Auth-3", HTTP-Basic), the service requested is a registration request REGISTER, and, according to data that can optionally be stored in the concerned AUP for said user, it is stated that (e.g.) only "Auth-1" is to be accepted for said service; then said authentication method (e.g.: "Auth-1" AKA) shall be used for authenticating said user for said request.
If, for example, the previous selection made in earlier steps 203 or 204 yielded only one authentication mechanism, step 205 can further comprise a check of the feasibility of said authentication mechanism for being used in the authentication process of said request based on the service or resource it concerns.
In any case, only one authentication mechanism should result as selected after execution of step 205.

A determination can be made in step 206 concerning the node (or functional server entity) in the telecommunication system that will finally perform the authentication of the user for the received request. This determination can be made, for instance, based on a data table that relates each supported authentication mechanism with the node in the telecommunication system entitled for it; i.e.: a node having well-known authentication means for authenticating a user according to a well-known authentication mechanism.
The specific nature of the data that refers to a specific entitled node (or functional server entity) depends to a large extent on implementation details, as well as on the specific characteristics of the telecommunication system (e.g.: the number of nodes of a given type in the telecommunication system, the type of nodes intervening in serving a given request from a user, etc.). Thus, for example, the entitled node can be referenced by a name that states its type (e.g.: "S-CSCF", "HSS", etc.); or, for example, by an address that identifies uniquely a node (e.g.: "*scscf3.homeABC.net*", "*hss1.homeABC.net*", etc.). In any case, the data related to the node entitled for a given authentication mechanism, shall be sufficient for determining in the node running this stage (step 207) of this selection process (200) if it is itself the entitled node, or not; and, if it is not, to determine the node (or functional server entity) entitled for it.
It shall be noticed that the same node could be entitled to serve more than one authentication mechanism and also that a given authentication mechanism could be equally served from more than one node in the telecommunication system.
Fig.3 (302) shows a table with a possible data configuration for the determination of step 206, wherein a server entity (S-CSCF) is entitled for authenticating according to a first authentication mechanism (noted as "Auth-1"), while another server entity (HSS) is entitled for authenticating according to a second and third authentication mechanisms (noted as "Auth-2", "Auth-3").

Once the determination of step 206 is made, in step 207 it is verified whether the node (or functional server entity) running at this stage (step 207) this selection process (200) is the one entitled for the selected authentication mechanism. If it is the same as the one running this step of the selection process (200) then, in step 208, it will send the order to authenticate towards the registering terminal (UE). This order is coded, further processed, transmitted, etc., according to well-known procedures specified for the well-known selected authentication mechanism.
Otherwise, if it is another node, the node running this step of the selection process (200) forwards in step 209 to said selected node (e.g.: directly, or through another intervening node) the data needed for performing the authentication of the user, according to the selected authentication mechanism, from said selected node. The specific nature of this data will depend to a great extent on the selected authentication mechanism, as well as on the knowledge within the selected node of the parameter(s) needed for performing an authentication according to said mechanism. For example, if the selected authentication mechanism is AKA, then the selected node (or functional server entity) for running authentication of said user from said terminal according to AKA, should be able to, either: access to the long-term secret key (Ki) assigned to the requesting user for generating one (or more) authentication vectors AV based on said long-term secret key (Ki), or receive one (or more) of said authentication vectors AV. If, for example, the selected authentication mechanism is HTTP-Basic, then it should know (or obtain) the "user-name" and "password" of said user.
Preferably (although it can be redundant in some implementations wherein, for example, the authentication mechanism can be inferred from the data received for performing the authentication), an explicit indication of the selected authentication mechanism can be sent from the node executing the selection process (200) at this stage to the node entitled for performing the authentication.

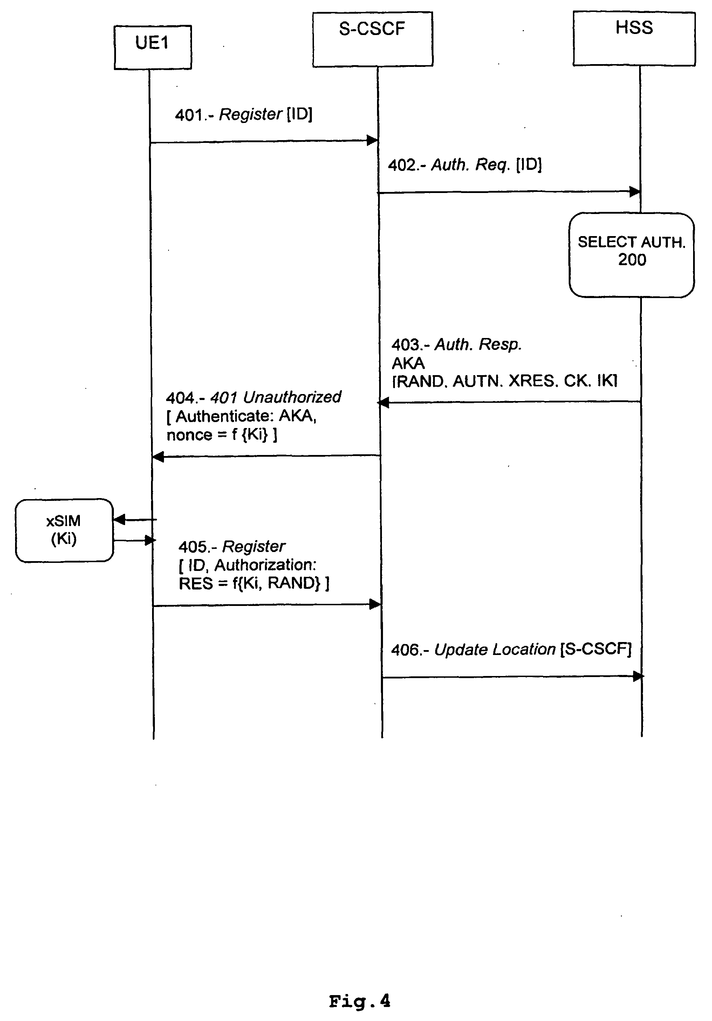

Reference is now made to signaling flows shown in figures 4, 5 and 6 to illustrate the authentication of a user in the IMS of a 3G system according to the invention. In all cases depicted in these figures, a *registration request* REGISTER is used as an example of a request which is received from a user equipment (UE1, UE2) and which is subject to user authentication. However, as cited previously, there can be more kinds of requests that, according to the known-art and/or the authentication policy deployed in a telecommunication system, can also be subject to authentication, and wherein the principles of this invention can equally apply.
Also, in all cases shown, the means for selecting an authentication mechanism according to process 200 appears to be implemented within the HSS. This should be considered as an advantageous alternative embodiment having less impact in the IMS of a 3G system. One reason is that the HSS is the master entity storing and handling subscriber data, thus having direct access to, among other data, the authentication profile AUP of the user who requests the service. Another reason is that, currently, the HSS is always queried from the S-CSCF upon reception of some requests that are, usually, always subject to authentication, such as a registration request, REGISTER. However, this should not be considered as compelling any other alternative embodiment wherein said means for selecting an authentication mechanism resides within any other entity (or node) intervening in the processing of the request, such as, for example, within the S-CSCF.
For simplicity reasons, in the signaling flows shown in figures 4, 5 and 6, other entities (such as P-CSCFs, I-CSCFs) intervening in these flows (as shown in prior-art Fig.1), have been omitted.

In steps 401, 501 or 601 of, respectively, figures 4, 5 and 6, a registration request, REGISTER, is received in a *Serving Call State Control Function,* S-CSCF. The request conveys, according to SIP protocol, one or more identifiers (ID) that identify the user issuing said request (such as a SIP-URL: *John_Doe@homeABC.net*). As previously mentioned with reference to prior-art Fig.1, a state-of-the-art S-CSCF already has means for receiving a user request and means for detecting that said user is not authenticated. Therefore, if the user is not yet authenticated for this request (i.e.: in this case, it is not a "*re-registration*"), in corresponding steps 402, 502 or 602, the S-CSCF will send a request to the HSS for authenticating said user (*Auth.Req.*). The communication protocol used for sending this request from the S-CSCF to the HSS, as well as for its eventual response, can be the aforementioned DIAMETER protocol, or any other suitable communication protocol.
The request sent to the HSS conveys one or more of the user identifiers (ID) received in the REGISTER, that can be used by to the HSS to find out the data corresponding to said user, as well as, if received in the request REGISTER, authentication information AUI related to one or more authentication mechanisms supported by the user equipment (UE1, UE2). The request sent to the HSS can further convey information relating to the kind of service and/or resource embodied in the received request; hence, in this example case, it can state that is a "registration request".

Differences in further steps of figures 4, 5 and 6 will hereinafter be described using example cases that shows variations on various factors, such as: the authentication information AUI received; the selected AUP; the server entity entitled for the selected authentication mechanism; or alternative embodiments for executing the authentication of said user from his/her terminal (UE1, UE2) according to the selected authentication mechanism.

The terminal shown in Fig.4 (UE1) is, for example, a mobile terminal accessing the 3G system via UTRAN and equipped with a SIM card containing an xSIM that stores the long-term secret key assigned to a user of said 3G system (Ki), and that contains the authentication logic to operate the AKA authentication mechanism based on said secret key. It should be noted that, additionally, the same terminal, UE1, could be able to operate any other well known authentication mechanism, such as HTTP-Basic, that does not rely on a SIM card, but, instead, in the authentication logic provided by said terminal accessing a secret entered by the user into said terminal.
Then, upon reception in step 402 of the request for authentication (*Auth.Req*) in the HSS, it executes the authentication selection procedure (200) as described previously.

In Fig.4 has been assumed that the authentication mechanism selected in the selection (200) has been AKA (e.g.: the UE1 indicated it as supported, and it was a allowed according to the corresponding AUP; or has not been indicated by the UE1 but AKA has been selected according to the AUP and according to the service/resource requested), and, according to the table (Fig.3, 302) checked in step 206, the S-CSCF is the entity entitled for performing said authentication. Therefore, in step 403 the HSS answer back to the S-CSCF with a response (*Auth.Resp*) that contains an indication of the selected authentication mechanism (AKA) as well as one or more authentication vectors for starting AKA authentication from said S-CSCF, each of them built specifically to said user and comprising: RAND, AUTN, XRES, CK and IK. Additionally, the HSS can send an explicit indication that instructs the S-CSCF to perform the AKA authentication by itself, although, this could be unnecessary for the S-CSCF upon reception of authentication vectors and an AKA indication as an answer (*Auth.Resp*) to a previous authentication request (*Auth*.*Req*) sent to the HSS. Then, the S-CSCF starts in step 404 the authentication of said user from said terminal (UE1) according to AKA, which, as described previously with reference to Fig.1, starts with the sending to said terminal (UE1) a SIP message (*401 UNAUTHORIZED*) that conveys, among other data, an authentication string (*nonce*) which is a function of (i.e.: depends on) said long term secret key (f{Ki}) as it comprises a secret-key-dependant authentication token (AUTN).

The terminal (UE1) then passes the authentication string to the xSIM. The authentication logic in the xSIM, with the help of the long-term secret key that it stores (Ki), obtains the security keys CK and IK, verifies the message validity and computes the appropriate response (RES). Said result (RES) is the result of applying a specific ciphering algorithm defined by AKA to both: the part of the authentication string (nonce) that correspond to the RAND part of the authentication vector, and to the long term secret key (Ki) stored in said x-SIM (noted in Fig.4 as "f{Ki,RAND}"). Once obtained, said response (RES) is passed from the xSIM to the terminal (UE1) that sends in step 405 a new registration request, REGISTER. If the received response (RES) matches the expected response (XRES) of the authentication vector used in this AKA authentication, then the S-CSCF sends in step 406 an indication to the HSS (*Update Location*) informing it that this S-CSCF in particular (e.g.: *scscf5.homeABC.net*) is serving to this user for IM services. Beyond this step (which is equivalent to step 18 of Fig.1) more steps take place (not shown in Fig.4) which do not affect the understanding of the invention, wherein the user profile of this user is downloaded from the HSS to the S-CSCF, and wherein the terminal (UE1) receives a confirmation of its registration.

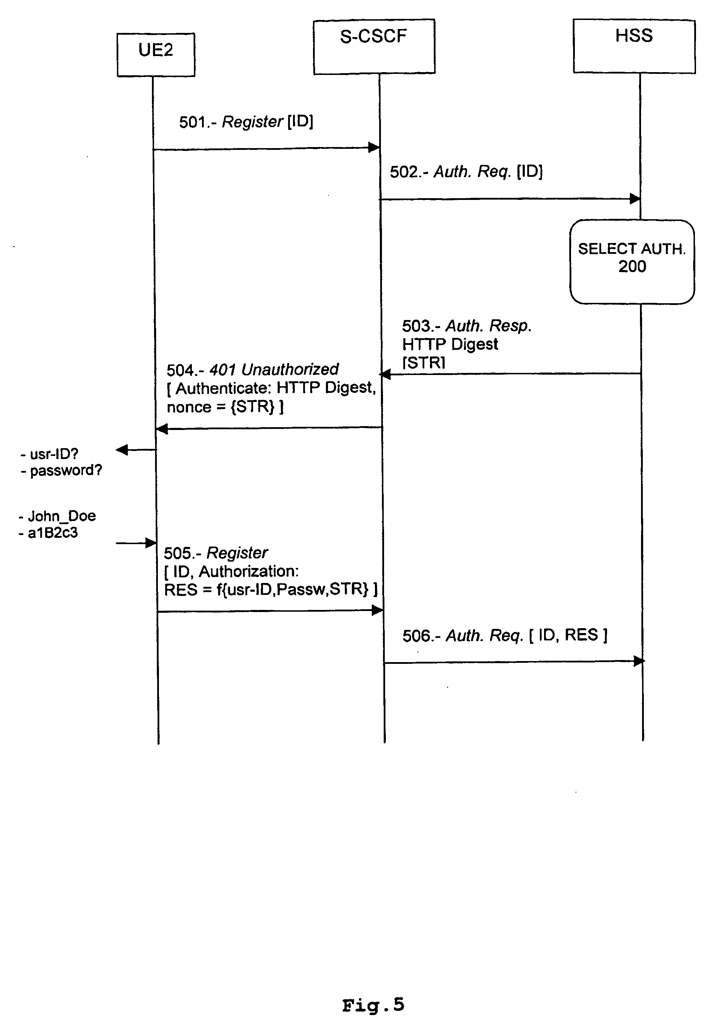

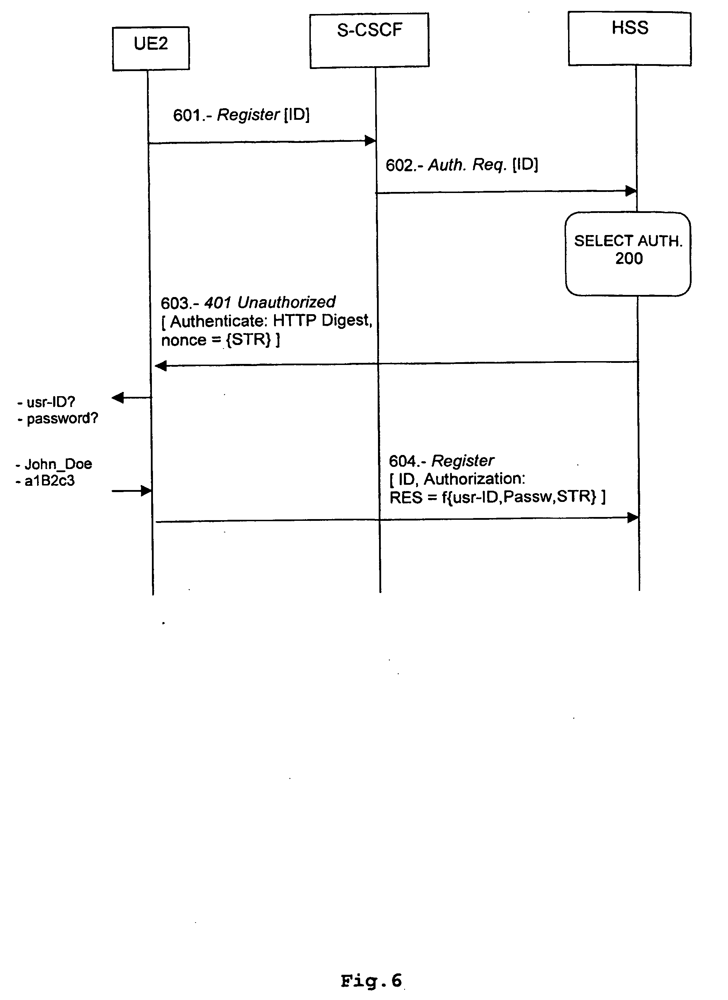

Figures 5 and 6 show alternative embodiments of an example case wherein the terminal used by the user (UE2) is, for example, a typical lap-top computer, having no SIM card connected to it. This terminal (UE2) can contain communication means (software and hardware) that allows it, by using a well-known communication protocol, such as SIP protocol, to communicate (e.g.: establish a multimedia communication, data session, etc.) with another entity implementing the SIP protocol through a connecting network. The terminal can support an authentication mechanism which does not rely on a SIM card and which is suitable to be used in combination with SIP, such as HTTP-Digest. In the same way as this kind of state-of-the-art terminals (such as described for UE2) are usually provided with additional communication means for communicating with other terminals through a communication network, such as a LAN (Local Area Network), they can be provided with means for communicating through another kind of connecting network, such as a WLAN that, as mentioned earlier, could provide access to a 3G system.
A request (e.g.: a registration request, REGISTER) can arrive from this terminal UE2 to a S-CSCF in step 501 (or 601) indicating the identity of its user (ID) and indicating HTTP-Digest as AUI. As previously described, the message sent in step 502 (or 602) would then convey the particular data of the received request, and would make the HSS run the authentication selection process (200).

In both: Fig.5 and Fig.6, it has been assumed that the authentication mechanism selected in the selection procedure (200) has been HTTP-Digest; for example, because the UE2 indicated it as supported in the REGISTER, and it was allowed according to the corresponding AUP (alternatively, if the UE2 indicated none, this mechanism could have been selected according to the AUP and according to the service/resource requested). It shall be noticed that the received request, REGISTER, can identify the same user as in the previous example of Fig.4; i.e.: the received request contains the same identifier (ID) or another one also related to the same user. Therefore, this authentication mechanism could also have been selected according to the specific AUP related to the ID of this user received in the request.
Also, for both flows depicted in figures 5 and 6, an example case has been considered wherein the table (Fig.3, 302) checked in step 206 states the HSS as the entity/node entitled for performing the authentication according to the selected authentication mechanism HTTP-Digest.

Flow starting in step 503 of Fig.5 shows an alternative embodiment wherein the S-CSCF intervenes in the authentication signaling process; while flow starting in step 603 of Fig.6 considers the same case for another alternative embodiment without the intervention of the S-CSCF. In both cases, the HSS generates an authentication string (STR) independently of a long-term secret key (Ki) that could be assigned to said user. Thus, this string can be a fully random string of characters, although it could also contain some data (such as a time-stamp) that avoids the repetition of a value (thus, reinforcing the quality of the protection of the authentication against replay attacks).

In the alternative embodiment shown in Fig.5, the HSS answers back in step 503 to the S-CSCF with a response (*Auth.Resp*) that contains an indication of the selected authentication mechanism (HTTP Digest) as well as the authentication string (STR). Additionally, the HSS can send an explicit indication to the S-CSCF stating that the HSS is entitled for authenticating the user (i.e.: entitled for granting the authentication based on the response) although this indication could (depending on implementation details) be unnecessary for the S-CSCF if it receives in the response (*Auth.Resp*) from the HSS a given authentication mechanism (such as, for example, HTTP Digest). Then, according to the information received from the HSS, in step 504, the S-CSCF sends to said terminal (UE2) a SIP message (*401 UNAUTHORIZED*) that conveys, among other data, the received authentication string (STR) as *nonce.*
In the alternative embodiment shown in Fig.6, the HSS itself builds said message (SIP message: *401 UNAUTHORIZED*) and in step 603 forwards it towards the UE2 (whose address, or the address of any other node mediating in the signaling, can be known in the HSS, for example, if included in the previous request -*Auth.Req*- or if included in any other previously received query or information).

In order to build up an appropriate response (RES) according to HTTP-Digest authentication, the authentication logic operative in the terminal UE2 needs to know, among other data, some secret data related to its user, more precisely, it needs to know the combination of *user-name* and *password* of said user. For this purpose, it can prompt (through a user interface, such as its display) the user to input said secret data. Alternatively, the terminal could have said secret data stored previously from a previous user input and, for example, it can prompt the user to enter a PIN (i.e.: a further secret shared between the user and the terminal, used to locally authenticate some operations) to allow its use. Once said secret data (e.g.: *user-name* = John_Doe; *password* = a1B2c3) are available to the terminal UE2, it calculates the response using a well-known message digest algorithm, such as MD5 (IETF RFC1321, Apr-1992) or SHA-1 (Secure Hash Algorithm; NIST, 180-1, Apr-1995) of said secret concatenated with the whole content of the received authentication string (STR) and with other additional data (such as a realm identifier). The result of the digest algorithm (RES), which is a function of said user provided secret and said authentication string (STR) (noted as "f{usr-ID,Passw,STR}" in figures 5 and 6), is sent in a new registration request, REGISTER, as shown in step 505 of Fig.5, or step 604 of Fig.6.

According to the alternative shown in Fig.5, wherein the S-CSCF intervenes in the authentication process, it unpacks the message and requests (*Auth.Req*) the HSS in step 506 the authentication of this user. The message sent in this case conveys, among other data, one or more user identifiers (ID) that have been received in the REGISTER, as well as the received authentication response (RES).
In the alternative embodiment shown in Fig.6, the new register message arrives (step 604) to the HSS that directly unpacks and interprets it.
In order to determine if the received response (RES) is the valid one, the HSS needs to perform the same digest algorithm over the same data as the terminal UE2 did. For this purpose the HSS can have access to the user-ID and password of this user as they are (i.e.: in clear), or to the corresponding result of the digest algorithm over said secret data (this last option being more secure, since it allows that the combination of said user-ID and password is not stored in clear in any node).

Since the S-CSCF will be the entity serving the user for the requested service, it needs to be informed about the authentication of said user for the received request. Thus, if the user is successfully authenticated in the HSS, the HSS can send a response (*Auth.Resp*) (not shown in figures 5 or 6) to the S-CSCF indicating that said user has obtained a granted authentication for the request received previously (*Auth.Req*). Subsequently (although not shown in figures 5 or 6), and for the purpose of fitting with existing rules in the IMS of a 3G system, for this specific service request (registration) the S-CSCF can send to the HSS an indication (*Update Location*) stating that this S-CSCF in particular (e.g.: *scscf5.homeABC.net*) is serving this user for IM services. This, as previously cited with reference to Fig.4, would trigger further steps wherein the user profile is downloaded from the HSS to the S-CSCF, and wherein the terminal UE2 receives a confirmation of the registration.

## Claims

1. A method for authenticating users in a telecommunication system according to a plurality of authentication mechanisms, the method comprising the steps of:
receiving (401) in said telecommunication system a request from a terminal (UE1) requesting a service for a user,
detecting that said user is not authenticated in said telecommunication system for said request, and
selecting (200) among said plurality of authentication mechanisms one authentication mechanism for authenticating said user according to, at least one among:
data contained in said request related to at least one authentication mechanism supported by said terminal, and
an authentication profile (AUP) comprising data related to one or more authentication mechanisms (Auth-1,Auth-2,Auth-3) supported for authenticating at least said user in said telecommunication system;
the method **CHARACTERIZED in that**:
the step of selecting one authentication mechanism for authenticating said user for said request comprises the step of selecting (205) in said telecommunications system said authentication mechanism according to a service or resource demanded in said request.

2. The method of claim 1, wherein an authentication profile further comprises a relationship between a service or resource that can be requested from a terminal and data related to one or more authentication mechanisms allowed for accessing said service or resource.

3. The method of claim 2, wherein the step of selecting one authentication mechanism for authenticating said user for said request further comprises the steps of:
determining (202,204) an authentication profile according to a service or resource demanded in said request (401), and
selecting (205) an authentication mechanism allowed by said authentication profile.

4. The method of claim 3, wherein said authentication profile is further determined according to an identifier related to said user received in said request (401).

5. The method of claims 3 or 4, wherein said request (401) contains data related to at least one authentication mechanism supported by said terminal, and wherein the step of selecting one authentication mechanism for authenticating said user for said request comprises the step of selecting (203,205) an authentication mechanism supported by said terminal that matches an authentication mechanism allowed by said authentication profile.

6. The method of claim 1, further comprising the steps of:
selecting (206) according to said selected authentication mechanism a server entity (S-CSCF, HSS) in said telecommunication system for authenticating said user, and
authenticating (208,209,404) said user from said selected server entity according to the selected authentication mechanism.

7. The method of claim 1, wherein said plurality of authentication mechanism comprises at least a first and a second authentication mechanisms;
said first authentication mechanism being based on an authentication string (404,F{Ki}) generated in said telecommunication system from a first secret, said first secret being contained in an identity module connected to said terminal, the first authentication mechanism being operative by authentication logic provided by said identity module;
and said second authentication mechanism being based on an authentication string (504,STR) generated in said telecommunication system independently of any secret assigned to said user, the second authentication mechanism being operative by authentication logic provided in said terminal accessing a second secret from input data supplied by said user to said terminal.

8. A system for authenticating users in a telecommunication system according to a plurality of authentication mechanisms, the system comprising:
means for receiving (401) a request from a terminal (UE1) requesting a service from a user,
means for detecting that said user is not authenticated in said telecommunication system for said request, and
means for selecting (200) among said plurality of authentication mechanisms one authentication mechanism for authenticating said user according to, at least one among:
data contained in said request related to at least one authentication mechanism supported by said terminal, and
an authentication profile (AUP) comprising data related to one or more authentication mechanisms (Auth-1,Auth-2,Auth-3) supported for authenticating at least said user in said telecommunication system;
the system **CHARACTERIZED in that**:
the means for selecting one authentication mechanism for authenticating said user for said request comprises means for selecting (205) in said telecommunications system said authentication mechanism according to a service or resource demanded in said request.

9. The system of claim 8, wherein an authentication profile further comprises a relationship between a service or resource that can be requested from a terminal and data related to one or more authentication mechanisms allowed for accessing said service or resource.

10. The system of claim 9, wherein the means for selecting one authentication mechanism for authenticating said user for said request further comprises:
means for determining (202,204) an authentication profile according to a service or resource demanded in said request (401), and
means for selecting (205) an authentication mechanism allowed by said authentication profile.

11. The system of claim 10, wherein said authentication profile is further determined according to an identifier related to said user received in said request (401).

12. The system of claims 10 or 11, wherein said request (401) contains data related to at least one authentication mechanism supported by said terminal, and wherein the means for selecting one authentication mechanism for authenticating said user for said request comprises means for selecting (203,205) an authentication mechanism supported by said terminal that matches an authentication mechanism allowed by said authentication profile.

13. The system of claim 8, further comprising:
means for selecting (206,302) according to said selected authentication mechanism, a server entity (S-CSCF, HSS) in said telecommunication system for authenticating said user, and
means for authenticating (208,209,404) said user from said selected server entity according to the selected authentication mechanism.

14. The system of claim 8, wherein said plurality of authentication mechanisms comprises at least a first and a second authentication mechanism;
said first authentication mechanism being based on an authentication string (404,F{Ki}) generated in said telecommunication system from a first secret, said first secret being contained in an identity module connected to said terminal, the first authentication mechanism being operative by authentication logic provided by said identity module;
and said second authentication mechanism being based on an authentication string (504,STR) generated in said telecommunication system independently of any secret assigned to said user, the second authentication mechanism being operative by authentication logic provided in said terminal accessing a second secret from input data supplied by said user to said terminal.

## Patentansprüche

1. Verfahren zur Authentifizierung von Benutzern in einem Telekommunikationssystem nach mehreren Authentifizierungsmechanismen, wobei das Verfahren die folgenden Schritte umfasst:
Erhalten (401), im Telekommunikationssystem, einer Anforderung von einem Endgerät (UE1), die einen Dienst für einen Benutzer anfordert,
Feststellen, dass dieser Benutzer im Telekommunikationssystem nicht für diese Anforderung authentifiziert ist, und
Auswählen (200) eines Authentifizierungsmechanismus zum Authentifizieren des Benutzers aus den mehreren Authentifizierungsmechanismen nach zumindest einem aus dem Folgenden:
in der Anforderung enthaltenen Daten im Zusammenhang mit zumindest einem Authentifizierungsmechanismus, der durch das Endgerät unterstützt wird, und
einem Authentifizierungsprofil (AUP), das Daten im Zusammenhang mit einem oder mehreren Authentifizierungsmechanismen (Auth-1, Auth-2, Auth-3) umfasst, die im Telekommunikationssystem zum Authentifizieren zumindest dieses Benutzers unterstützt werden;
wobei das Verfahren **DADURCH GEKENNZEICHNET IST, dass**
der Schritt des Auswählens eines Authentifizierungsmechanismus zum Authentifizieren des Benutzers für die Anforderung den Schritt des Auswählens (205), im Telekommunikationssystem, des Authentifizierungsmechanismus nach einem Dienst oder einem Betriebsmittel, der/das in der Anforderung verlangt wird, umfasst.

2. Verfahren nach Anspruch 1, wobei ein Authentifizierungsprofil ferner eine Beziehung zwischen einem Dienst oder einem Betriebsmittel, der/das von einem Endgerät angefordert werden kann, und Daten im Zusammenhang mit einem oder mehreren Authentifizierungsmechanismen, die zum Zugreifen auf den Dienst oder das Betriebsmittel gestattet sind, umfasst.

3. Verfahren nach Anspruch 2, wobei der Schritt des Auswählens eines Authentifizierungsmechanismus zum Authentifizieren des Benutzers für die Anforderung ferner folgende Schritte umfasst:
Bestimmen (202, 204) eines Authentifizierungsprofils nach einem Dienst oder einem Betriebsmittel, der/das in der Anforderung (401) verlangt wird, und
Auswählen (205) eines Authentifizierungsmechanismus, der durch das Authentifizierungsprofil gestattet wird.

4. Verfahren nach Anspruch 3, wobei das Authentifizierungsprofil ferner nach einer Kennung im Zusammenhang mit dem Benutzer, die in der Anforderung (401) erhalten wird, bestimmt wird.

5. Verfahren nach Anspruch 3 oder 4, wobei die Anforderung (401) Daten im Zusammenhang mit zumindest einem Authentifizierungsmechanismus, der durch das Endgerät unterstützt wird, enthält, und wobei der Schritt des Auswählens eines Authentifizierungsmechanismus zum Authentifizieren des Benutzers für die Anforderung den Schritt des Auswählens (203, 205) eines durch das Endgerät unterstützten Authentifizierungsmechanismus umfasst, der einem durch das Authentifizierungsprofil gestatteten Authentifizierungsmechanismus entspricht.

6. Verfahren nach Anspruch 1, ferner umfassend folgende Schritte:
Auswählen (206), nach dem ausgewählten Authentifizierungsmechanismus, einer Servereinheit (S-CSCF, HSS) im Telekommunikationssystem zum Authentifizieren des Benutzers, und
Authentifizieren (208, 209, 404) des Benutzers von der ausgewählten Servereinheit nach dem gewählten Authentifizierungsmechanismus.

7. Verfahren nach Anspruch 1, wobei die mehreren Authentifizierungsmechanismen zumindest einen ersten und einen zweiten Authentifizierungsmechanismus umfassen;
der erste Authentifizierungsmechanismus auf einer Authentifizierungszeichenfolge (404, F{Ki}) beruht, die im Telekommunikationssystem aus einem ersten Geheimnis erzeugt wird, wobei das erste Geheimnis in einem Identitätsmodul enthalten ist, das mit dem Endgerät verbunden ist, und der erste Authentifizierungsmechanismus durch eine Authentifizierungslogik tätig ist, die durch das Identitätsmodul bereitgestellt wird;
und der zweite Authentifizierungsmechanismus auf einer Authentifizierungszeichenfolge (504, STR) beruht, die im Telekommunikationssystem unabhängig von irgendeinem dem Benutzer zugeteilten Geheimnis erzeugt wird, wobei der zweite Authentifizierungsmechanismus durch eine Authentifizierungslogik tätig ist, die im Endgerät bereitgestellt ist und aus Eingabedaten, die dem Endgerät durch den Benutzer geliefert werden, auf ein zweites Geheimnis zugreift.

8. System zu Authentifizierung von Benutzern in einem Telekommunikationssystem nach mehreren Authentifizierungsmechanismen, wobei das System Folgendes umfasst:
ein Mittel zum Erhalten (401) einer Anforderung von einem Endgerät (UE1), die einen Dienst für einen Benutzer anfordert,
ein Mittel zum Feststellen, dass der Benutzer im Telekommunikationssystem nicht für diese Anforderung authentifiziert ist, und
ein Mittel zum Auswählen eines Authentifizierungsmechanismus zum Authentifizieren des Benutzers aus den mehreren Authentifizierungsmechanismen nach zumindest einem aus dem Folgenden:
in der Anforderung enthaltenen Daten im Zusammenhang mit zumindest einem Authentifizierungsmechanismus, der durch das Endgerät unterstützt wird und
einem Authentifizierungsprofil (AUP), das Daten im Zusammenhang mit einem oder mehreren Authentifizierungsmechanismen (Auth-1, Auth-2, Auth-3) umfasst, die im Telekommunikationssystem zum Authentifizieren zumindest dieses Benutzers unterstützt werden;
wobei das System **DADURCH GEKENNZEICHNET IST, dass**
das Mittel zum Auswählen des Authentifizierungsmechanismus zum Authentifizieren des Benutzers für die Anforderung ein Mittel zum Auswählen (205), im Telekommunikationssystem, des Authentifizierungsmechanismus nach einem Dienst oder einem Betriebsmittel, der/das in der Anforderung verlangt wird, umfasst.

9. System nach Anspruch 8, wobei ein Authentifizierungsprofil ferner eine Beziehung zwischen einem Dienst oder einem Betriebsmittel, der/das von einem Endgerät angefordert werden kann, und Daten im Zusammenhang mit einem oder mehreren Authentifizierungsmechanismen, die zum Zugreifen auf den Dienst oder das Betriebsmittel gestattet sind, umfasst.

10. System nach Anspruch 9, wobei das Mittel zum Auswählen des Authentifizierungsmechanismus zum Authentifizieren des Benutzers für die Anforderung ferner Folgendes umfasst:
ein Mittel zum Bestimmen (202, 204) eines Authentifizierungsprofils nach einem Dienst oder einem Betriebsmittel, der/das in der Anforderung (401) verlangt wird, und
ein Mittel zum Auswählen (205) eines Authentifizierungsmechanismus, der durch das Authentifizierungsprofil gestattet wird.

11. System nach Anspruch 10, wobei das Authentifizierungsprofil ferner nach einer Kennung im Zusammenhang mit dem Benutzer, die in der Anforderung (401) erhalten wird, bestimmt wird.

12. System nach Anspruch 10 oder 11, wobei die Anforderung (401) Daten im Zusammenhang mit zumindest einem Authentifizierungsmechanismus, der durch das Endgerät unterstützt wird, enthält, und wobei das Mittel zum Auswählen eines Authentifizierungsmechanismus zum Authentifizieren des Benutzers für die Anforderung ein Mittel zum Auswählen (203, 205) eines durch das Endgerät unterstützten Authentifizierungsmechanismus umfasst, der einem durch das Authentifizierungsprofil gestatteten Authentifizierungsmechanismus entspricht.

13. System nach Anspruch 8, ferner umfassend Folgendes:
ein Mittel zum Auswählen (206, 302), nach dem ausgewählten Authentifizierungsmechanismus, einer Servereinheit (S-CSCF, HSS) im Telekommunikationssystem zum Authentifizieren des Benutzers, und
ein Mittel zum Authentifizieren (208, 209, 404) des Benutzers von der ausgewählten Servereinheit nach dem gewählten Authentifizierungsmechanismus.

14. System nach Anspruch 8, wobei die mehreren Authentifizierungsmechanismen zumindest einen ersten und einen zweiten Authentifizierungsmechanismus umfassen;
der erste Authentifizierungsmechanismus auf einer Authentifizierungszeichenfolge (404, F{Ki}) beruht, die im Telekommunikationssystem aus einem ersten Geheimnis erzeugt wird, wobei das erste Geheimnis in einem Identitätsmodul enthalten ist, das mit dem Endgerät verbunden ist, und der erste Authentifizierungsmechanismus durch eine Authentifizierungslogik tätig ist, die durch das Identitätsmodul bereitgestellt wird;
und der zweite Authentifizierungsmechanismus auf einer Authentifizierungszeichenfolge (504, STR) beruht, die im Telekommunikationssystem unabhängig von irgendeinem dem Benutzer zugeteilten Geheimnis erzeugt wird, wobei der zweite Authentifizierungsmechanismus durch eine Authentifizierungslogik tätig ist, die im Endgerät bereitgestellt ist und aus Eingabedaten, die dem Endgerät durch den Benutzer geliefert werden, auf ein zweites Geheimnis zugreift.

## Revendications

1. Procédé d'authentification d'utilisateurs dans un système de télécommunications selon une pluralité de mécanismes d'authentification, le procédé comprenant les étapes de :
réception (401) dans ledit système de télécommunications, d'une requête émanant d'un terminal (UE1) demandant un service pour un utilisateur,
détection que ledit utilisateur n'est pas authentifié dans ledit système de télécommunications pour ladite requête, et
sélection (200) parmi ladite pluralité de mécanismes d'authentification d'un mécanisme d'authentification pour authentifier ledit utilisateur selon au moins l'un parmi :
les données contenues dans ladite requête et liées à au moins un mécanisme d'authentification supporté par ledit terminal et,
un profil d'authentification (AUP) comprenant des données liées à un ou plusieurs mécanisme(s) d'authentification (Auth-1, Auth-2, Auth-3) supporté(s) afin d'authentifier au moins ledit utilisateur dans ledit système de télécommunications ;
le procédé étant **caractérisé en ce que** :
l'étape de sélection d'un mécanisme d'authentification pour authentifier ledit utilisateur, pour ladite requête, comprend l'étape de sélection (205) dans ledit système de télécommunications, dudit mécanisme d'authentification selon un service ou une ressource demandé(e) dans ladite requête.

2. Procédé selon la revendication 1, dans lequel un profil d'authentification comprend en outre une relation entre un service ou une ressource qui peut être demandé(e) à un terminal et des données liées à un ou plusieurs mécanisme(s) d'authentification autorisés à avoir accès au dit service ou à ladite ressource.

3. Procédé selon la revendication 2, dans lequel l'étape de sélection d'un mécanisme d'authentification pour l'authentification dudit utilisateur pour ladite requête comprend en outre les étapes de :
détermination (202, 204) d'un profil d'authentification selon un service ou une ressource demandé(e) dans ladite requête (401), et
sélection (205) d'un mécanisme d'authentification autorisé par ledit profil d'authentification.

4. Procédé selon la revendication 3, ledit profil d'authentification est en outre déterminé selon un identifiant lié au dit utilisateur reçu dans ladite requête (401).

5. Procédé selon la revendication 3 ou 4, dans lequel ladite requête (401) contient des données liées à au moins un mécanisme d'authentification supporté par ledit terminal, et dans lequel l'étape de sélection d'un mécanisme d'authentification pour l'authentification dudit utilisateur pour ladite requête comprend l'étape de sélection (203, 205) d'un mécanisme d'authentification supporté par ledit terminal qui correspond à un mécanisme d'authentification autorisé par ledit profil d'authentification.

6. Procédé selon la revendication 1, comprenant en outre les étapes de :
sélection (206) selon ledit mécanisme d'authentification sélectionné d'une entité de serveur (S-CSCF, HSS) dans ledit système de télécommunications afin d'authentifier ledit utilisateur, et
authentification (208, 209, 404) dudit utilisateur à partir de ladite entité de serveur sélectionnée, selon le mécanisme d'authentification sélectionné.

7. Procédé selon la revendication 1, dans lequel ladite pluralité de mécanismes d'authentification comprend au moins un premier et un second mécanismes d'authentification ;
ledit premier mécanisme d'authentification étant fondé sur une chaîne d'authentification (404, F{Ki]) générée dans ledit système de télécommunications à partir d'un premier secret, ledit premier secret étant contenu dans un module d'identité connecté au dit terminal, le premier mécanisme d'authentification étant opérationnel grâce à la logique d'authentification fournie par ledit module d'identité ;
et ledit second mécanisme d'authentification étant fondé sur une chaîne d'authentification (504, STR) générée dans ledit système de télécommunications indépendamment de tout secret attribué au dit utilisateur, ledit second mécanisme d'authentification étant opérationnel grâce à la logique d'authentification fournie dans ledit terminal ayant accès à un second secret des données entrées fournies par ledit utilisateur au dit terminal.

8. Système d'authentification d'utilisateurs dans un système de télécommunications selon une pluralité de mécanisme(s) d'authentification, le système comprenant :
un moyen pour recevoir (401) une requête d'un terminal (UE1) demandant un service pour un utilisateur,
un moyen pour détecter que ledit utilisateur n'est pas authentifié dans ledit système de télécommunications pour ladite requête ; et
un moyen pour sélectionner (200) parmi ladite pluralité de mécanismes d'authentification un mécanisme d'authentification pour authentifier ledit utilisateur selon au moins un parmi :
les données contenues dans ladite requête liées à au moins un mécanisme d'authentification supporté par ledit terminal, et
un profil d'authentification (AUP) comprenant des données liées à un ou plusieurs mécanisme(s) d'authentification ((Auth-1, Auth-2, Auth-3) supporté(s) afin d'authentifier au moins ledit utilisateur dans ledit système de télécommunications ;
le système étant **caractérisé en ce que** :
le moyen pour sélectionner un mécanisme d'authentification pour authentifier ledit utilisateur, pour ladite requête, comprend un moyen pour sélectionner (205) dans ledit système de télécommunications, ledit mécanisme d'authentification selon un service ou une ressource demandé(e) dans ladite requête.

9. Système selon la revendication 8, dans lequel un profil d'authentification comprend en outre une relation entre un service ou une ressource qui peut être demandé(e) à un terminal et des données liées à un ou plusieurs mécanisme(s) d'authentification autorisé(s) à avoir accès au dit service ou à ladite ressource.

10. Système selon la revendication 9, dans lequel le moyen pour sélectionner un mécanisme d'authentification pour authentifier ledit utilisateur pour ladite requête comprend en outre :
un moyen pour déterminer (202, 204) un profil d'authentification selon un service ou une ressource demandé(e) dans ladite requête (401) ; et
un moyen pour sélectionner (205) un mécanisme d'authentification autorisé par ledit profil d'authentification.

11. Système selon la revendication 10, dans lequel ledit profil d'authentification est en outre déterminé selon un identifiant lié au dit utilisateur reçu dans ladite requête (401).

12. Système selon la revendication 10 ou 11, dans lequel ladite requête (401) contient des données liées à au moins un mécanisme d'authentification supporté par ledit terminal, et dans lequel le moyen pour sélectionner un mécanisme d'authentification pour authentifier ledit utilisateur pour ladite requête comprend un moyen pour sélectionner (203, 205) un mécanisme d'authentification supporté par ledit terminal qui correspond à un mécanisme d'authentification autorisé par ledit profil d'authentification.

13. Système selon la revendication 8, comprenant en outre :
un moyen pour sélectionner (206, 302) selon ledit mécanisme d'authentification sélectionné, une entité de serveur (S-CSCF, HSS) dans ledit système de télécommunications afin d'authentifier ledit utilisateur, et
un moyen pour authentifier (208, 209, 404) ledit utilisateur à partir de ladite entité de serveur sélectionnée, selon le mécanisme d'authentification sélectionné.

14. Système selon la revendication 8, dans lequel ladite pluralité de mécanismes d'authentification comprend au moins un premier et un second mécanismes d'authentification :
ledit premier mécanisme d'authentification étant fondé sur une chaîne d'authentification (404, F{Ki]) générée dans ledit système de télécommunications à partir d'un premier secret, ledit premier secret étant contenu dans un module d'identité connecté au dit terminal, le premier mécanisme d'authentification étant opérationnel grâce à la logique d'authentification fournie par ledit module d'identité ;
et ledit second mécanisme d'authentification étant fondé sur une chaîne d'authentification (504, STR) générée dans ledit système de télécommunications indépendamment de tout secret attribué au dit utilisateur, ledit second mécanisme d'authentification étant opérationnel grâce à la logique d'authentification fournie dans ledit terminal ayant accès à un second secret des données entrées fournies par ledit utilisateur au dit terminal.
